# FASCICULE DE BREVET EUROPEEN

(11) **EP 1 985 151 B1**
(45) Date de publication et mention de la délivrance du brevet: **25.05.2016**
(21) Numéro de dépôt: 07731614.9
(22) Date de dépôt: 13.02.2007
(51) Int. Cl.: H04W 48/08, H04W 36/32, H04W 36/08

(54) **PROCEDE D'ALLOCATION D'AU MOINS UN POINT D'ACCES A UN TERMINAL MOBILE, DANS UN RESEAU CELLULAIRE, TERMINAL, SERVEUR DE MOBILITE ET PROGRAMMES CORRESPONDANTS**
VERFAHREN ZUR ZUORDNUNG MINDESTENS EINES ZUGANGSPUNKTES ZU EINEM MOBILEN ENDGERÄT IN EINEM MOBILTELEFONNETZWERK, ENTSPRECHENDES ENDGERÄT, MOBILITÄTSSERVER UND PROGRAMME
METHOD FOR ALLOCATING AT LEAST ONE ACCESS POINT TO A MOBILE TERMINAL IN A CELLULAR NETWORK, CORRESPONDING TERMINAL, MOBILITY SERVER AND PROGRAMMES

(30) Priorité: 13.02.2006 FR 0601251
(43) Date de publication de la demande: 29.10.2008
(73) Titulaire: Orange, 75015 Paris (FR)
(72) Inventeur: GUILLOUARD, Karine, F-35135 Chantepie (FR); BERTIN, Philippe, F-35690 Acigne (FR); BONJOUR, Servane, F-35690 Acigne (FR); MONTAVONT, Julien, F-67000 Strasbourg (FR); NOEL, Thomas, F-67230 Westhouse (FR)
(74) Mandataire: Vidon Brevets & Stratégie
(86) Numéro de dépôt international: PCT/FR2007/050789
(87) Numéro de publication internationale: WO 2007/093734

(56) Documents cités:
- WO-A-2004/027445
- WO-A-2005/120017
- US-A- 6 167 274
- US-A1- 2005 096 051

## Description

### 1. domaine de l'invention

Le domaine de l'invention est celui des radiocommunications dans des réseaux cellulaires. Plus précisément, l'invention concerne l'amélioration du passage d'un terminal mobile d'une cellule courante à une cellule voisine, lorsqu'un terminal se déplace à l'intérieur du réseau.

L'invention s'applique par exemple dans le domaine des réseaux à points d'accès radio de type WiFi.

### 2. art antérieur

Ce mécanisme est généralement désigné à l'aide du terme anglais « handover ».

Selon les techniques classiques, la procédure de handover nécessite une phase de négociation entre points d'accès radio, requérant une phase de découverte des points d'accès voisins.

Différentes approches ont été proposées pour simplifier et accélérer la procédure de handover. On connaît ainsi une technique, divulguée dans le document "Hierarchical Mobility controlled by the network" (mobilité hiérarchique contrôlée par le réseau), Y. Khouaja, K. Guillouard, JM Bonnin, Ph. Bertin, Multiaccess, Mobility and Teletraffic for Wireless Communications, vol. 6, 2002, qui met en oeuvre un gestionnaire de mobilité (GM) dans un réseau de données basé sur le protocole IP, permettant à l'opérateur de réseau de contrôler efficacement la mobilité des terminaux IP (également appelés noeuds mobiles, ou NM (les différents sigles utilisés par la suite sont définis au paragraphe 6.1)) qu'il dessert.

Les éléments essentiels de cette approche sont les suivants :
- remontée d'informations du NM vers le GM sur la qualité de la transmission entre le NM et plusieurs points d'accès (PA) voisins lorsque la qualité de transmission avec le PA courant atteint un seuil critique ;
- demande de changement de PA par le NM (sans spécifier le nouveau PA cible) ;
- changement de PA géré par le GM avec duplication des données transmises au NM (paquets IP) entre le GM et l'ancien PA d'une part et entre le GM et le nouveau PA d'autre part ;
- implantation d'un GM par domaine de mobilité, contenant un certain nombre de PA, associé à une base de données (BD).

Un inconvénient de cette technique est que le terminal doit effectuer une phase de mesures pour son point courant ainsi que pour l'ensemble des points d'accès voisins indiqués par le réseau. Dès que son signal radio passe sous un seuil critique, le terminal doit remonter l'ensemble des mesures obtenues (point d'accès courant et points d'accès voisins). Ces opérations sont consommatrices en temps de traitement et en capacité de mémoire, en particulier pour des terminaux de faible capacité, ou « légers ».

D'autres améliorations ont été proposées, notamment par la société CISCO, et plus précisément la technique dite « Solution WDS Cisco » (marques déposées). Un intérêt est d'offrir une optimisation du temps de handover pour un terminal passant d'un point d'accès à un autre dans un réseau WLAN sécurisé. Ses caractéristiques principales sont de :
- réduire la phase de découverte des points d'accès par une liste de points d'accès voisins, construite dynamiquement au fur à mesure des déplacements des terminaux ;
- d'accélérer la phase d'authentification en se basant sur un serveur d'authentification localisé.

Cependant, même réduite, la phase de découverte des points d'accès est toujours présente.

Le document WO 2005/120017 divulgue un terminal de communication sans fil comprenant des circuits de traitement des signaux de communication sans fil d'un réseau sous licence (par exemple le GSM) et des circuits de traitement des signaux de communication sans fil d'un réseau sans licence (par exemple WiFi). Ce terminal comprend également un processeur et une mémoire qui comprend des instructions pour mesurer les forces respectives des signaux afin de basculer une communication d'un type de réseau à un autre.

Le document US 2005/096051 A1 divulgue un procédé pour réaliser une procédure de « handover » dans un réseau de communication mobile. Le réseau de communication mobile comprend un terminal mobile, une station de base courante à laquelle la terminal mobile est connecté, et une ou plusieurs de stations de base ciblées ayant au moins une zone de cellule chevauchant celle de la station de base courante. Ce document propose une méthode pour identifier une station de base cible pour handover, à l'aide des mesures CINRs et QoS des stations de base voisines.

Le document US 6167274 A divulgue une méthode pour localiser un terminal mobile dans une cellule d'un réseau de communication mobile. Selon ce document, le terminal mobile peut recevoir une liste de fréquences utilisées par les cellules voisines et effectue des mesures associées avec la liste de fréquences. La localisation du terminal mobile est réalisée par une comparaison des résultats mesurés avec une base de données des résultats mesurés dans différentes positions de la cellule.

### 3. Objectifs de l'invention

L'invention a notamment pour objectif de pallier ces inconvénients des techniques de l'art antérieur.

Plus précisément, un objectif de l'invention est de fournir une technique permettant d'améliorer et de simplifier les opérations de handover entre deux cellules, lorsqu'un terminal passe de l'une à l'autre.

En particulier, un objectif de l'invention est de fournir une telle technique, qui simplifie les traitements effectuer dans les terminaux, et/ou qui permette d'accélérer les opérations de transfert entre deux cellules.

### 4. résumé de l'invention

Ces objectifs, ainsi que d'autres qui apparaîtront plus clairement par la suite, sont atteints à l'aide d'un procédé d'allocation d'au moins un point d'accès, dans un réseau cellulaire formé d'une pluralité de cellules contrôlées chacune par un point d'accès, et à l'intérieur duquel se déplacent des terminaux mobiles. Selon l'invention, ce procédé comprend les étapes suivantes :
- localisation d'un terminal mobile à l'intérieur d'une cellule courante ;
- identification, à l'aide de ladite localisation, d'une cellule cible auprès de laquelle ledit terminal est susceptible de se raccorder ;
- transmission audit terminal, par anticipation, d'un contexte cible, comprenant au moins un identifiant du point d'accès de ladite cellule cible ;
- mise en oeuvre d'une procédure de connexion dudit terminal audit point d'accès de la cellule cible, en fonction d'un critère prédéterminé de changement de cellule.

Ainsi, l'invention permet de supprimer la phase de découverte des points d'accès voisins, en anticipant la transmission des informations nécessaires.

Il est à noter que cette phase représente,dans les techniques antérieures, une des composantes les plus importantes de la durée d'un « handover ». L'invention s'affranchit de cette composante, en déterminant directement selon un moyen spécifique un point d'accès cible. Se faisant, il devient possible d'optimiser le temps de « handover en préparant le nouveau contexte de connexion par avance.

Pour mémoire, des travaux antérieurs ont montré que le temps de handover entre deux points d'accès, dans le cas de la norme IEEE 802.11, est constitué à 90% par la durée de la phase de découverte des points d'accès. L'invention permet ainsi de réduire le délai de « handover » à 20 ms environ. Ce résultat peut être comparé à celui obtenu avec la solution « WDS Cisco », actuellement la plus efficace, qui ne permet de réduire le délai de « handover » qu'à 50 ms environ.

De façon avantageuse, ladite étape de localisation est mise en oeuvre lorsqu'au moins un critère de qualité prédéterminé a atteint un premier seuil. Ce seuillage peut se faire de façon simple, sur un critère tel que la puissance du signal reçu. On peut également combiner plusieurs critères, tels que ceux listés par la suite.

Selon un mode de réalisation préférentiel de l'invention, ladite étape de localisation est mise en oeuvre par ledit terminal mobile. Cette localisation peut alors comprendre les étapes suivantes :
- détection qu'au moins un desdits critères prédéterminés a atteint le premier seuil correspondant ;
- détermination de la localisation dudit terminal mobile ;
- transmission de coordonnées de localisation vers un contrôleur de mobilité, afin que ce dernier puisse déterminer une cellule cible.

Avantageusement, ledit critère prédéterminé de basculement est identique à au moins un desdits critères de qualité prédéterminés, ledit basculement étant mis en oeuvre lorsqu'il a atteint un second seuil.

De façon préférentielle, au moins une des étapes appartenant au groupe comprenant ladite étape de localisation et/ou une étape de mesure du ou desdits critères de qualité sont mises en oeuvre dans lesdits terminaux mobiles.

Le terminal remonte ensuite ces informations vers le contrôleur de mobilité.

Le ou lesdits critères de qualité peuvent notamment appartenir au groupe comprenant :
- un niveau de signal reçu ;
- changement de mode de transmission et/ou de réception ;
- un type de modulation utilisé ;
- un rapport signal sur bruit ;
- un taux d'erreurs ;
- un taux de collisions ;
- un temps d'accès moyen ;
- un taux de groupes de données émises et non reçues ;
- un taux de retransmission de groupes de données (trames et/ou paquets).

Selon une caractéristique avantageuse de l'invention, l'étape de transmission d'un contexte cible n'est mise en oeuvre que lorsqu'une analyse de la localisation indique que ledit terminal est à proximité d'une cellule cible, selon un critère de localisation prédéterminé.

Il est en effet intéressant de prendre en compte le fait que le terminal est proche ou non d'une frontière de la cellule courante.

De façon préférentielle, ledit contexte cible comprend au moins un identifiant de ladite cellule cible, représenté par une adresse de type IP, une adresse de type MAC ou au moins une information permettant de reconstituer une telle adresse.

Selon différents modes de mise en oeuvre, ledit contexte cible peut comprendre également au moins une des informations appartenant au groupe comprenant :
- des informations de sécurité ;
- des informations de cryptage ;
- des informations d'authentification ;
- des informations sur la technique d'accès et/ou de transmission mises en oeuvre par le point d'accès cible ;
- une adresse dudit terminal, de type IP, une adresse de type MAC ou au moins une information permettant de reconstituer une telle adresse.

Dans un mode de réalisation particulier, ladite étape de transmission d'un contexte cible est, au moins dans des conditions prédéterminées, complétées par la transmission d'au moins un contexte cible subsidiaire, à utiliser dans l'hypothèse où, après tentative de connexion, la connexion au point d'accès identifié dans le contexte cible ne convient pas.

L'invention concerne également les terminaux mobiles destinés à être mis en oeuvre dans un réseau cellulaire mettant en oeuvre au moins certains aspects du procédé décrit ci-dessus. Un tel terminal est revendiqué dans la revendication 11.

L'invention concerne encore le procédé de contrôle de l'allocation d'au moins un point d'accès mis en oeuvre dans un tel terminal mobile, en correspondance avec les caractéristiques de la revendication 14.

L'invention concerne également un produit programme d'ordinateur téléchargeable depuis un réseau de communication et/ou stocké sur un support lisible par ordinateur et/ou exécutable par un microprocesseur, et comprenant des instructions de code de programme pour la mise en oeuvre de ce procédé dans un terminal en correspondance avec les caractéristiques de la revendication 15.

L'invention concerne encore un contrôleur de mobilité d'un réseau cellulaire mettant en oeuvre au moins certains aspects du procédé décrit ci-dessus en correspondance avec les caractéristiques de la revendication 13.

L'invention concerne aussi le procédé mis en oeuvre dans un contrôleur de mobilité en correspondance avec les caractéristiques de la revendication 15.

L'invention concerne également un produit programme d'ordinateur téléchargeable depuis un réseau de communication et/ou stocké sur un support lisible par ordinateur et/ou exécutable par un microprocesseur, et comprenant des instructions de code de programme pour la mise en oeuvre de ce procédé dans un serveur de mobilité en correspondance avec les caractéristiques de la revendication 17.

### 5. liste des figures

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1 est un organigramme simplifié du procédé de l'invention ;
- la figure 2 illustre les différents échanges de données mis en oeuvre dans un système mettant en oeuvre un mode de réalisation du procédé de la figure 1 ;
- les figures 3A et 3B présentent la structure de deux des messages échangés dans le système de la figure 2 :

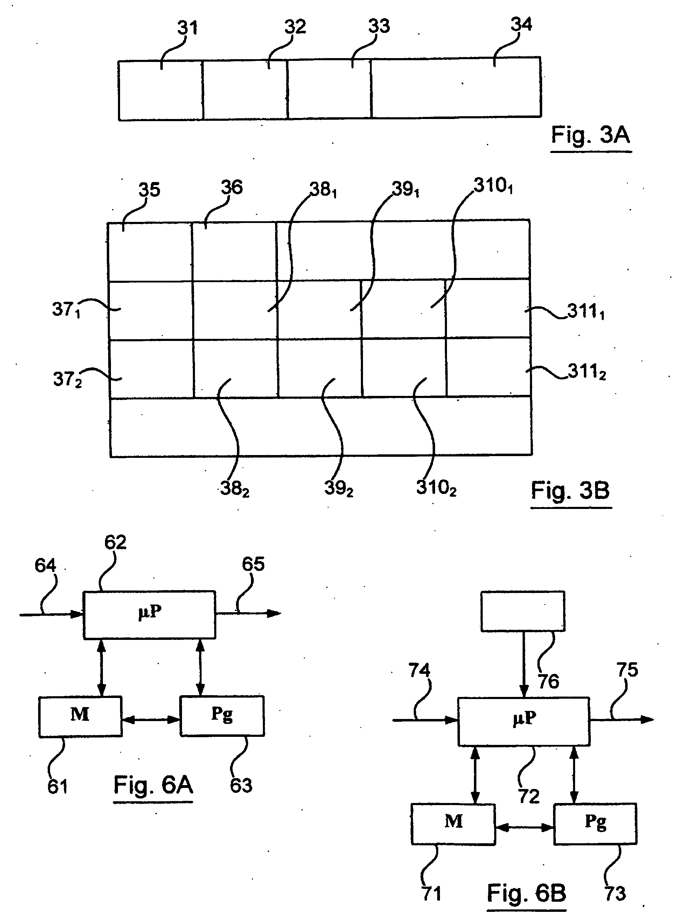

   - figure 3A : un message émis par un terminal vers le contrôleur de mobilité ;
   - figure 3B : un message émis par le contrôleur vers un terminal ;

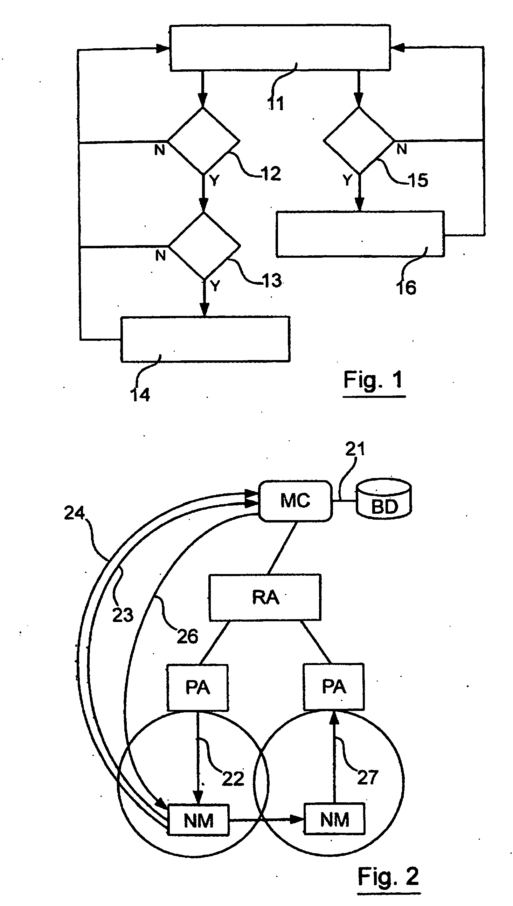

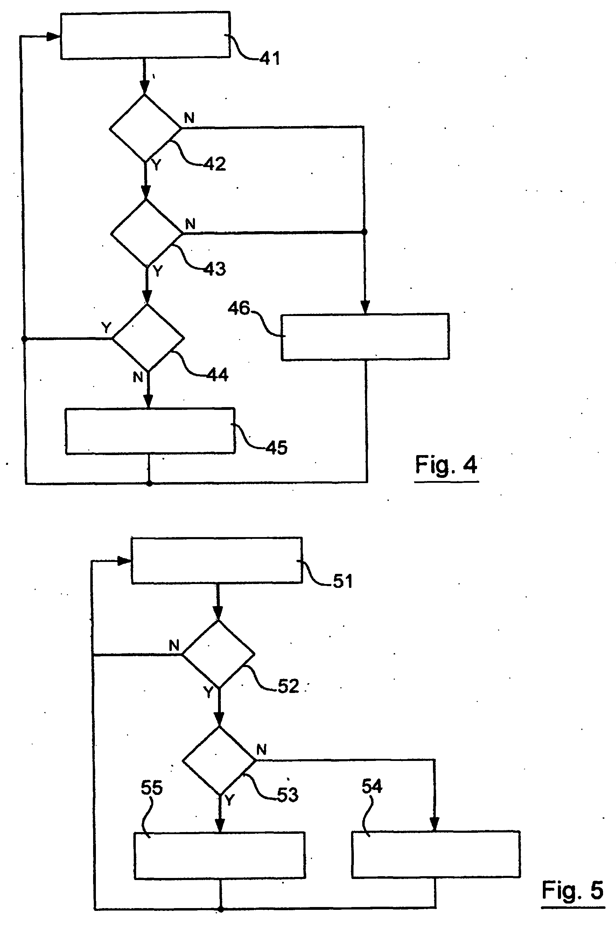

- la figure 4 est un organigramme simplifié décrivant les étapes mises en oeuvre par un contrôleur de mobilité dans le système de la figure 2 ;
- la figure 5 est un organigramme simplifié décrivant les étapes mises en oeuvre par un terminal dans le système de la figure 2 ;
- les figures 6A et 6B illustrent schématiquement les structures d'un contrôleur de mobilité et d'un terminal respectivement, mettant en oeuvre un mode de réalisation de l'invention.

### 6. description d'un mode de réalisation préférentiel de l'invention

### 6.1 Définition des sigles utilisés

On utilise dans la présente description les sigles et définitions suivants :
- MC, pour Contrôleur de Mobilité : accède à une base de données qui maintient toutes les informations sur les points d'accès du domaine qu'il gère : informations sur la localisation des points d'accès, informations requises par un noeud mobile pour s'attacher à un point d'accès, informations de configuration des points d'accès (position, adresse MAC, canal occupé, portée,...). On associe un MC à un domaine de mobilité ;
- PA, pour Point d'Accès : assure l'attachement au niveau radio du noeud mobile au domaine, se connecte à un routeur d'accès IP.
- RA, pour Routeur d'accès : assure l'attachement du noeud mobile au domaine IP à travers un PA ;
- Domaine de mobilité : ensemble de RA et de PA. Un domaine de mobilité peut être raccordé au réseau Internet.
- NM, pour Noeud Mobile : terminal IP.

### 6.2 principaux aspects de l'invention

L'invention propose donc une approche nouvelle, qui permet de s'affranchir de la phase de découvertes des points d'accès, dans une procédure de « handover ».

Le principe général de l'invention repose sur une approche en deux temps : une phase d'anticipation, ou de préparation, du « handover » et une phase de « handover » proprement dite, sur la base d'informations transmises pendant la phase d'anticipation.

Pour cela, on met en oeuvre deux niveaux de mesure (sur un ou plusieurs critères, qui peuvent ou non être les mêmes) :
- le premier permet de détecter que le terminal s'approche d'une frontière d'une cellule, et devra probablement bientôt changer de cellule ;
- le second permet de détecter que le terminal doit changer de cellule.
Ainsi, comme illustré par la figure 1, le procédé comprend les étapes suivantes :
- remontée 11, du terminal vers le contrôleur de mobilité, via le point d'accès courant, à la fois d'une information représentative de la qualité, par exemple une mesure de la puissance du signal radio reçu avec ce point d'accès (dit point d'accès courant), et de la position du terminal ;
- lorsque l'information représentative de la qualité correspond à un signal faible, en dessous d'un premier seuil (test 12), le contrôleur de mobilité vérifie (13) si le terminal est en bordure de zone, à l'aide des informations de position transmises par ce dernier ;
- si oui, le contrôleur envoie (14) au terminal un contexte pour pouvoir se raccorder à un autre point d'accès proche de sa position ;
- lorsque la mesure du signal remontée descend en dessous d'un deuxième seuil inférieur au premier (test 15), raccordement 16 du terminal au nouveau point d'accès défini dans le contexte transmis.

Ainsi, selon l'invention, le changement de point d'attachement du terminal est assisté par une entité dans le réseau (serveur, routeur), nommée contrôleur de mobilité, ou «Mobility Controller » en anglais (MC), qui collecte des informations sur le réseau et sur le terminal (par ex. localisation du terminal, cartes des points d'accès...). C'est cette entité qui pré-sélectionne par anticipation un point d'accès cible.

Pour préparer le « handover », le terminal ne mesure la qualité du signal radio qu'avec son point d'accès courant. Le terminal n'a pas à remonter au réseau le niveau du signal radio avec ses points d'accès voisins, ni même à les mesurer. Ceci permet de limiter la surcharge sur le lien radio et la consommation d'énergie requise par le terminal pour effectuer les mesures.

Le MC détermine et fournit au terminal un contexte relatif au point d'accès cible dès que le terminal est attaché au réseau et que la mesure radio remontée par le terminal passe sous un seuil pré-défini. Ce contexte est créé même si le terminal est encore sous la couverture de son point d'accès courant (c'est-à-dire même si la liaison entre le point d'accès et le terminal est encore de qualité suffisante pour couvrir le terminal).

Ce contexte fournit une identification du point d'accès cible ainsi que, préférentiellement, les informations requises pour s'associer à ce point d'accès (par exemple des informations nécessaires à une authentification, ou à un changement de protocole ou de technologie).

Ainsi, le contexte transmis par le MC au terminal peut indiquer en outre tout ou partie des informations requises (préfixe réseau, route par défaut...) par le terminal pour configurer une adresse valide, lorsque le changement de point d'accès requiert un changement d'adresse réseau. Ainsi, lorsqu'un nouveau contexte est créé pour le terminal (création ou mise à jour), le terminal peut configurer automatiquement par avance une adresse valide qu'il pourra utiliser dès son attachement au point d'accès cible.

Selon une variante de mise en oeuvre, le contexte généré par le MC peut indiquer directement la nouvelle adresse correspondant au point d'accès cible. La constitution par le MC de l'adresse cible est alors réalisée à partir de la sélection du point d'accès cible qui fournit le préfixe réseau correspondant et à partir de l'identifiant unique du terminal stocké dans le cache du MC. Ce mécanisme garantit l'unicité de l'adresse constituée. Le fait que le MC fournisse directement au MN la nouvelle adresse réseau du MN permet au MN de réduire la durée de la phase d'acquisition d'adresse. En outre, la garantie de l'unicité de l'adresse constituée permet de réduire la phase de découverte dé duplication d'adresse (DAD) au niveau du terminal.

Lors d'un «handover» proprement dit (lorsque le second seuil a été franchit), le terminal essaie directement de s'attacher à un seul point d'accès, le point d'accès pré-sélectionné, sans scruter ce point d'accès sélectionné : il n'y a donc pas de procédure de sélection de points d'accès. En d'autres termes, la phase de recherche de point d'accès au niveau du terminal, présente dans toutes les techniques de l'art antérieur, est supprimée.

Ainsi, la pré-sélection au niveau du terminal du point d'accès sur lequel il doit s'associer est directe. Le terminal ne maintient pas une liste de points d'accès susceptibles de pouvoir l'accueillir mais stocke uniquement, par anticipation, un point d'accès cible.

Dans une variante de mise en oeuvre, le MC peut indiquer une liste de points d'accès sur lequel le terminal doit tenter de s'associer. Dans ce cas, en cas d'échec de l'association avec le premier point d'accès listé, le terminal tente de s'associer avec le deuxième point d'accès, puis avec le troisième, et ainsi de suite. En cas d'échec avec l'ensemble des points d'accès listés, le terminal peut entamer une procédure de « handover » classique (phase de recherche de points d'accès incluse).

L'approche par anticipation selon l'invention permet de simplifier et optimiser les traitements. Dès que le MC détecte que le contexte établi n'est plus valide, il demande le changement de contexte, que le terminal met en oeuvre sur la base des informations relatives au contexte pour son point d'accès cible qu'il a déjà reçu, alors qu'il est encore sous la couverture de son point d'accès courant (dans certains cas d'ailleurs, le basculement n'aura pas lieu, par exemple si le terminal a changé de direction).

La localisation du terminal peut notamment se faire par l'intermédiaire de moyens de de géolocalisation (par exemple GPS) présent dans le terminal. Dans ce cas, la sélection du point d'accès cible par le MC peut se faire sur prédiction de la trajectoire du mobile.

On peut prévoir que le message envoyé par le MC au terminal contenant le nouveau contexte indique en outre si le terminal doit basculer immédiatement sur le nouveau point d'accès mentionné ou s'il doit attendre que son signal radio passe sous un second seuil pour basculer sur le nouveau point d'accès. Ceci permet au MC d'ordonner au terminal de changer de point d'accès en tenant compte également d'autres informations, par exemple des données de charge des points d'accès et non plus uniquement des données de géolocalisation.

Lorsque l'association à un point d'accès requiert une étape d'authentification (par exemple dans le cadre d'un système de type WLAN avec IEEE 802.11i), le terminal peut, lorsqu'il reçoit le contexte de son point d'accès cible, déclencher une procédure de pré-authentification avec son point d'accès cible via son point d'accès courant. Ceci permet, lors de l'exécution du « handover », d'accélérer l'étape d'authentification avec le point d'accès cible.

### 6.3 exemple de mise en oeuvre

La figure 2 illustre les différents échanges de données, selon un mode de réalisation avantageux de l'invention.

Le MC obtient les informations des PA du domaine (position, adresse MAC, canal, portée, ...) en consultant (21) une base de données BD prévue à cet effet.

Chaque terminal NM1 mesure (22) la qualité de transmission avec son PA courant, et envoie périodiquement (23) au MC sa position actuelle, la qualité de signal courante et son PA courant.

Lorsque la qualité de signal d'un mobile passe en dessous d'un seuil S1, le terminal NM1 envoie (24) un message au MC contenant les informations citées précédemment, par exemple sous la forme d'un message unique comprenant les champs [position, signal radio, identifiant du PA courant]. La figure 3A présente un exemple de structure d'un tel message, appelée message MUP.

Ce message comprend les champs suivants :
- adresse MAC du terminal 31 ;
- adresse MAC du PA courant 32 :
- informations RSS courantes du terminal 33 ;
- position du terminal 34.

Lorsque le MC reçoit un tel message d'un mobile, il applique (35) une procédure de recherche d'un PA cible, décrite figure 4 et commentée par la suite. Si un nouveau contexte est créé, le MC le transmet (36) au NM. Ce contexte contient le moyen d'identifier le PA cible. La figure 3B présente un exemple de structure de message correspondant (appelé CT message). Il comprend les champs suivants :
- nombre de PA cibles transmis 35 ;
- un bit 36 permettant de demander au terminal la mise en oeuvre immédiate d'un « handover » ; et
- pour chacun des PA cibles, les champs (connus en eux-mêmes) :
   - une adresse MAC du PA 37₁, 37₂... ;
   - une identifiant SSID du PA 38₁, 38₂...;
   - un identifiant du canal du PA 39₁, 39₂... ;
   - une longueur du préfixe CoA (qui est le champ suivant et qui vaut 0 si ce dernier n'est pas présent) 310₁, 310₂... ;
   - un champ optionnel CoA (« Care of Address » en anglais) pour 311₁, 311₂...

Enfin, si un contexte est affecté au mobile NM et que sa qualité de signal passe en dessous d'un seuil S2, celui-ci effectue (27) un « handover » vers le PA cible (premier PA indiqué si une liste est transmise dans le contexte) en s'attachant directement au PA indiqué (NM ne scrute pas les PA accessibles). Le traitement mis en oeuvre par le terminal est décrit plus en détail ci-après, en relation avec la figure 5.

On décrit maintenant le traitement mis en oeuvre par le contrôleur de mobilité MC, selon le mode de réalisation illustré par la figure 4.

Le MC reçoit périodiquement (41), de chaque terminal, un message précisant la qualité du signal reçu et la position du terminal (par exemple sous la forme illustrée figure 3A). La qualité du signal est, dans l'exemple considéré, proportionnelle à la puissance reçue par le terminal.

Si cette puissance est inférieure à un premier seuil prédéterminé S1 (test 42), le MC détermine (test 43) si le mobile se trouve en limite de couverture de la cellule courante (la faible qualité pouvant le cas échéant être dû à une autre raison), en fonction des informations de localisation.

Si la réponse est positive à ces deux tests 42 et 43, le MC vérifie s'il a déjà transmis un contexte cible valide au terminal (test 44). Si cela est le cas, il n'y a rien de plus à faire, et le MC attend un nouveau message (41).

Sinon, il construit ou met à jour le contexte cible et l'envoie au mobile (45).

Lorsque l'un des tests 42 et 43 est négatif, le MC peut créer (46) une entrée précisant qu'il n'y a pas de nouveau contexte cible pour l'instant (contexte « PA cible » vide).

Ensuite, on reboucle sur l'étape 41, pour attendre un nouveau message.

La figure 5 illustre schématiquement le traitement mis en oeuvre dans le terminal, dans un mode de réalisation avantageux.

Le terminal mesure (51) la puissance du signal reçu (et/ou d'autres informations représentatives de la qualité). Si cette puissance est supérieure au seuil S1 (test 52), on n'effectue aucun traitement, et on reboucle sur l'étape 51 de mesure.

Sinon, on compare la puissance à un second seuil S2 (test 53), plus exigeant que le seuil S1. Si l'on se trouve entre les seuils S1 et S2, le terminal construit et envoie (54) au MC un message indiquant qu'il se trouve probablement en limite de couverture, par exemple sous la forme illustrée par la figure 3A.

Si la puissance est inférieure à S2, il faut procéder à un « handover». Le terminal s'associe alors au PA identifié dans le contexte préalablement reçu (55).

Dans un exemple particulier de mise en oeuvre, le premier seuil S1 vaut - 75 dBm et le second seuil S2 vaut -78 dBm. D'autres valeurs peuvent bien sûr être sélectionnées, en fonction des besoins et des caractéristiques de la technique utilisée. D'autres critères peuvent également être utilisés pour juger de la qualité, tels que :
- un niveau de signal reçu ;
- un changement de mode de transmission et/ou de réception ;
- un type de modulation utilisé ;
- un rapport signal sur bruit ;
- un taux d'erreurs ;
- un taux de collisions ;
- un temps d'accès moyen ;
- un taux de groupes de données émises et non reçues ;
- un taux de retransmission de groupes de données ;

Le cas échéant, plusieurs critères peuvent être utilisés.

Au niveau du MC, le terminal mobile est considéré proche de la limite de couverture par exemple lorsqu'il est situé à une distance supérieure à 20 m de son point d'accès courant.

### 6.4 structure d'un terminal et d'un contrôleur de mobilité

La figure 6A présente la structure simplifiée d'un contrôleur de mobilité, en ce qui concerne l'invention. Ce dernier comprend une mémoire M 61, une unité de traitement 62, équipée par exemple d'un microprocesseur, et pilotée par le programme d'ordinateur Pg 63. A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée les données 64 émises par les différents terminaux (par exemple au format illustré figure 3A). Le microprocesseur µP de l'unité de traitement 62 décode ces données 64, selon les instructions du programme Pg 63. L'unité de traitement 62 délivre en sortie des messages 65 (par exemple au format illustré figure 3B), destinés aux différents terminaux.

La figure 6B présente la structure simplifiée d'un terminal, en ce qui concerne l'invention. Ce dernier comprend une mémoire M 71, une unité de traitement 72, équipée par exemple d'un microprocesseur, et pilotée par le programme d'ordinateur Pg 73. A l'initialisation, les instructions de code du programme d'ordinateur 63 sont par exemple chargées dans une mémoire RAM avant d'être exécutées par le processeur de l'unité de traitement 72. L'unité de traitement 72 reçoit en entrée les données 74 émises par le contrôleur de mobilité (par exemple au format illustré figure 3B). Le microprocesseur µP de l'unité de traitement 72 décode ces données 74, selon les instructions du programme Pg 73. L'unité de traitement 72 délivre en sortie des messages 75 (par exemple au format illustré figure 3A), destinés au contrôleur de mobilité.

De façon avantageuse, le terminal comprend également des moyens 76 de mesure d'un critère de qualité, par exemple la puissance du signal reçu.

## Revendications

1. Procédé d'allocation d'au moins un point d'accès à un terminal mobile, dans un réseau cellulaire formé d'une pluralité de cellules contrôlées chacune par un point d'accès, et à l'intérieur duquel se déplacent des terminaux mobiles, comprenant les étapes suivantes :
- localisation d'un terminal mobile à l'intérieur d'une cellule courante ;
- identification, à l'aide de ladite localisation, d'une cellule cible auprès de laquelle ledit terminal est susceptible de se raccorder ;
- transmission audit terminal, par anticipation, d'un contexte cible, comprenant au moins un identifiant du point d'accès de ladite cellule cible ;
- mise en oeuvre d'une procédure de connexion dudit terminal audit point d'accès de la cellule cible, en fonction d'un critère prédéterminé de changement de cellule.

2. Procédé selon la revendication 1, où ladite étape de localisation est mise en oeuvre lorsqu'au moins un critère de qualité prédéterminé a atteint un premier seuil.

3. Procédé selon la revendication 2, où ladite étape de localisation est mise en oeuvre par ledit terminal mobile, et comprend les étapes suivantes :
- détection qu'au moins un desdits critères prédéterminés a atteint le premier seuil correspondant ;
- détermination de la localisation dudit terminal mobile ;
- transmission de coordonnées de localisation vers un contrôleur de mobilité, afin que ce dernier puisse déterminer une cellule cible.

4. Procédé selon l'une quelconque des revendications 2 et 3, où ledit critère prédéterminé de changement de cellule est identique à au moins un desdits critères de qualité prédéterminés, ledit changement de cellule étant mis en oeuvre lorsqu'il a atteint un second seuil.

5. Procédé selon l'une quelconque des revendications 1 à 4, où au moins une des étapes appartenant au groupe comprenant ladite étape de localisation et/ou une étape de mesure du ou desdits critères de qualité sont mises en oeuvre dans lesdits terminaux mobiles.

6. Procédé selon l'une quelconque des revendications 2 à 5, où le ou lesdits critères de qualité appartiennent au groupe comprenant :
- un niveau de signal reçu ;
- un changement de mode de transmission et/ou de réception ;
- un type de modulation utilisé ;
- un rapport signal sur bruit ;
- un taux d'erreurs ;
- un taux de collisions ;
- un temps d'accès moyen ;
- un taux de groupes de données émises et non reçues ;
- un taux de retransmission de groupes de données.

7. Procédé selon l'une quelconque des revendications 1 à 6, où l'étape de transmission d'un contexte cible n'est mise en oeuvre que lorsqu'une analyse de la localisation indique que ledit terminal est à proximité d'une cellule cible, selon un critère de localisation prédéterminé.

8. Procédé selon l'une quelconque des revendications 1 à 7, où ledit contexte cible comprend au moins un identifiant de ladite cellule cible, représenté par une adresse de type IP, une adresse de type MAC ou au moins une information permettant de reconstituer une telle adresse.

9. Procédé selon la revendication 8, où ledit contexte cible comprend également au moins une des informations appartenant au groupe comprenant :
- des informations de sécurité ;
- des informations de cryptage ;
- des informations d'authentification ;
- des informations sur la technique d'accès et/ou de transmission mises en oeuvre par le point d'accès cible ;
- une adresse dudit terminal, de type IP, une adresse de type MAC ou au moins une information permettant de reconstituer une telle adresse.

10. Procédé selon l'une quelconque des revendications 1 à 9, où ladite étape de transmission d'un contexte cible est, dans des conditions prédéterminées, complétées par la transmission d'au moins un contexte cible subsidiaire, à utiliser dans l'hypothèse où, après tentative de connexion, la connexion au point d'accès identifié dans le contexte cible ne convient pas.

11. Terminal mobile destiné à être mis en oeuvre dans un réseau cellulaire formé d'une pluralité de cellules contrôlées chacune par un point d'accès, comprenant :
- des moyens de localisation, à l'intérieur d'une cellule courante, et de transmission d'informations de localisation vers un contrôleur de mobilité ;
- des moyens de réception, par anticipation, d'un contexte cible, comprenant au moins un identifiant du point d'accès d'une cellule cible vers laquelle il est susceptible de se diriger, ledit identifiant du point d'accès de ladite cellule cible ayant été identifié à l'aide de ladite localisation ;
- des moyens de connexion audit point d'accès de la cellule cible, en fonction d'un critère prédéterminé de changement de cellule.

12. Terminal mobile selon la revendication 11, comprenant des moyens d'évaluation d'au moins un critère de qualité, pilotant lesdits moyens de transmission d'informations de localisation et/ou lesdits moyens de connexion.

13. Contrôleur de mobilité d'un réseau cellulaire formé d'une pluralité de cellules contrôlées chacune par un point d'accès, comprenant :
- des moyens de réception d'informations de localisation transmise par un terminal mobile ;
- des moyens de détermination, en fonction desdites informations de localisation, d'un contexte cible, comprenant au moins un identifiant du point d'accès d'une cellule cible vers laquelle ledit terminal mobile est susceptible de se diriger ;
- des moyens de transmission audit terminal mobile, par anticipation, dudit contexte cible permettant une mise en oeuvre d'une procédure de connexion dudit terminal audit point d'accès de ladite cellule cible en fonction d'un critère prédéterminé de changement de cellule.

14. Procédé de contrôle de l'allocation d'au moins un point d'accès mis en oeuvre dans un terminal mobile présent dans un réseau cellulaire formé d'une pluralité de cellules contrôlées chacune par un point d'accès, comprenant les étapes suivantes :
- localisation dudit terminal, à l'intérieur d'une cellule courante, et transmission d'informations de localisation vers un contrôleur de mobilité ;
- réception, par anticipation, d'un contexte cible, comprenant au moins un identifiant du point d'accès d'une cellule cible vers laquelle il est susceptible de se diriger, ledit identifiant du point d'accès de ladite cellule cible ayant été identifié à l'aide de ladite localisation ;
- connexion audit point d'accès de la cellule cible, en fonction d'un critère prédéterminé de changement de cellule.

15. Produit programme d'ordinateur téléchargeable depuis un réseau de communication et/ou stocké sur un support lisible par ordinateur et/ou exécutable par un microprocesseur, comprenant des instructions de code de programme pour la mise en oeuvre dans un terminal mobile du procédé d'allocation selon la revendication 14.

16. Procédé de contrôle de l'allocation d'au moins un point d'accès à un terminal mobile présent dans un réseau cellulaire formé d'une pluralité de cellules contrôlées chacune par un point d'accès, mis en oeuvre dans un contrôleur de mobilité, comprenant les étapes suivantes :
- réception d'informations de localisation transmise par un terminal mobile ;
- détermination, en fonction desdites informations de localisation, d'un contexte cible, comprenant au moins un identifiant du point d'accès d'une cellule cible vers laquelle ledit terminal mobile est susceptible de se diriger ;
- transmission audit terminal mobile, par anticipation, dudit contexte cible, permettant une mise en oeuvre d'une procédure de connexion dudit terminal audit point d'accès de ladite cellule cible en fonction d'un critère prédéterminé de changement de cellule.

17. Produit programme d'ordinateur téléchargeable depuis un réseau de communication et/ou stocké sur un support lisible par ordinateur et/ou exécutable par un microprocesseur, comprenant des instructions de code de programme pour la mise en oeuvre dans un serveur de mobilité du procédé d'allocation selon la revendication 16.

## Patentansprüche

1. Verfahren zur Zuordnung mindestens eines Zugangspunktes zu einem mobilen Endgerät in einem Mobiltelefonnetzwerk, das von einer Vielzahl von Zellen gebildet ist, die jeweils von einem Zugangspunkt kontrolliert werden, und in dem sich mobile Endgeräte bewegen, umfassend die folgenden Schritte:
- Lokalisierung eines mobilen Endgeräts innerhalb einer laufenden Zelle;
- mit Hilfe der Lokalisierung Identifikation einer Zielzelle, an die sich das Endgerät anschließen kann;
- Übertragung eines Zielkontextes an das Endgerät durch Antizipation, umfassend mindestens einen Identifikator des Zugangspunktes der Zielzelle;
- Einsatz eines Anschlussverfahrens des Endgeräts an den Zugangspunkt der Zielzelle in Abhängigkeit von einem vorbestimmten Zellentauschkriterium.

2. Verfahren nach Anspruch 1, bei dem der Lokalisierungsschritt eingesetzt wird, wenn mindestens ein vorbestimmtes Qualitätskriterium eine erste Schwelle erreicht hat.

3. Verfahren nach Anspruch 2, bei dem der Lokalisierungsschritt durch das mobile Endgerät eingesetzt wird und die folgenden Schritte umfasst:
- Erfassung, dass mindestens eines der vorbestimmten Kriterien die erste entsprechende Schwelle erreicht hat;
- Bestimmung der Lokalisierung des mobilen Endgeräts;
- Übertragung von Lokalisierungskoordinaten zu einem Mobilitätsserver, damit dieser letztgenannte eine Zielzelle bestimmen kann.

4. Verfahren nach einem der Ansprüche 2 und 3, bei dem das vorbestimmte Zellentauschkriterium mit mindestens einem der vorbestimmten Qualitätskriterien identisch ist, wobei der Zellentausch eingesetzt wird, wenn es eine zweite Schwelle erreicht hat.

5. Verfahren nach einem der Ansprüche 1 bis 4, bei dem mindestens einer der Schritte, der der Gruppe, umfassend den Lokalisierungsschritt und/oder den Schritt des Messens des oder der Qualitätskriterien, angehört, in den mobilen Endgeräten eingesetzt wird.

6. Verfahren nach einem der Ansprüche 2 bis 5, bei dem das oder die Qualitätskriterien der Gruppe angehören, umfassend:
- einen empfangenen Signalpegel;
- eine Änderung des Übertragungs- und/oder Empfangsmodus;
- einen verwendeten Modulationstyp;
- ein Signal-Lärm-Verhältnis;
- eine Fehlerrate;
- eine Kollisionsrate;
- eine durchschnittliche Zugriffszeit;
- eine Rate von gesandten und nicht empfangenen Datengruppen;
- eine Neuübertragungsrate von Datengruppen.

7. Verfahren nach einem der Ansprüche 1 bis 6, bei dem der Schritt der Übertragung eines Zielkontextes nur eingesetzt wird, wenn eine Analyse der Lokalisierung anzeigt, dass nach einem vorbestimmten Lokalisierungskriterium das Endgerät in der Nähe einer Zielzelle ist.

8. Verfahren nach einem der Ansprüche 1 bis 7, bei dem der Zielkontext mindestens einen Identifikator der Zielzelle umfasst, der von der Adresse des Typs IP, einer Adresse des Typs MAC oder mindestens einer Information, die es ermöglicht, eine solche Adresse wiederherzustellen, dargestellt ist.

9. Verfahren nach Anspruch 8, bei dem der Zielkontext auch mindestens eine der folgenden Informationen umfasst, die der Gruppen angehören, umfassend:
- Sicherheitsinformationen;
- Verschlüsselungsinformationen;
- Authentifizierungsinformationen;
- Informationen über die Zugangs- und/oder Übertragungstechnik, die von dem Zielzugangspunkt eingesetzt wird;
- eine Adresse des Endgeräts des Typs IP, eine Adresse des Typs MAC oder mindestens eine Information, die es ermöglicht, eine solche Adresse wiederherzustellen.

10. Verfahren nach einem der Ansprüche 1 bis 9, bei dem der Schritt der Übertragung eines Zielkontextes unter vorbestimmten Bedingungen durch die Übertragung mindestens eines Nebenzielkontextes, der unter der Annahme zu verwenden ist, dass nach einem Anschlussversuch der Anschluss an den identifizierten Zugangspunkt im Zielkontext nicht entspricht, vervollständigt wird.

11. Mobiles Endgerät, das dazu bestimmt ist, in einem Mobiltelefonnetzwerk eingesetzt zu werden, das von einer Vielzahl von Zellen gebildet ist, die jeweils von einem Zugangspunkt kontrolliert werden, umfassend:
- Mittel zur Lokalisierung innerhalb einer laufenden Zelle und zur Übertragung von Lokalisierungsinformationen zu einem Mobilitätsserver;
- Mittel für den Empfang eines Zielkontextes durch Antizipation, umfassend mindestens einen Identifikator des Zugangspunktes einer Zielzelle, an die es sich wenden kann, wobei der Identifikator des Zugangspunktes der Zielzelle mit Hilfe der Lokalisierung identifiziert wurde;
- Mittel für den Anschluss an den Zugangspunkt der Zielzelle, in Abhängigkeit von einem vorbestimmten Zellentauschkriterium.

12. Mobiles Endgerät nach Anspruch 11, umfassend Mittel zur Beurteilung mindestens eines Qualitätskriteriums, die die Mittel zur Übertragung von Lokalisierungsinformationen und/oder die Anschlussmittel steuern.

13. Mobilitätsserver eines Mobiltelefonnetzwerks, das von einer Vielzahl von Zellen gebildet ist, die jeweils von einem Zugangspunkt kontrolliert werden, umfassend:
- Mittel für den Empfang von Lokalisierungsinformationen, die von einem mobilen Endgerät übertragen werden;
- Mittel zur Bestimmung eines Zielkontextes in Abhängigkeit von den Lokalisierungsinformationen, umfassend mindestens einen Identifikator des Zugangspunktes einer Zielzelle, an die sich das mobile Endgerät wenden kann;
- Mittel zur Übertragung des Zielkontextes an das mobile Endgerät durch Antizipation, die einen Einsatz eines Anschlussverfahrens des Endgeräts an den Zugangspunkt der Zielzelle in Abhängigkeit von einem vorbestimmten Zellentauschkriterium ermöglichen.

14. Verfahren zur Kontrolle der Zuordnung mindestens eines Zugangspunktes, das in einem mobilen Endgerät eingesetzt wird, das in einem Mobiltelefonnetzwerk vorhanden ist, das von einer Vielzahl von Zellen gebildet ist, die jeweils von einem Zugangspunkt kontrolliert werden, umfassend die folgenden Schritte:
- Lokalisierung des Endgeräts innerhalb einer laufenden Zelle und Übertragung von Lokalisierungsinformationen an einen Mobilitätsserver;
- Empfang eines Zielkontextes durch Antizipation, umfassend mindestens einen Identifikator des Zugangspunktes einer Zielzelle, an die es sich wenden kann, wobei der Identifikator des Zugangspunktes der Zielzelle mit Hilfe der Lokalisierung identifiziert wurde;
- Anschluss an den Zugangspunkt der Zielzelle, in Abhängigkeit von einem vorbestimmten Zellentauschkriterium.

15. Computerprogrammprodukt, das von einem Kommunikationsnetzwerk fernladbar und/oder auf einem von einem Computer lesbaren Träger gespeichert und/oder von einem Mikroprozessor ausführbar ist, umfassend Programmcodebefehle für den Einsatz des Zuordnungsverfahrens nach Anspruch 14 in einem mobilen Endgerät.

16. Verfahren zur Kontrolle der Zuordnung mindestens eines Zugangspunktes zu einem mobilen Endgerät, das in einem Mobiltelefonnetzwerk vorhanden ist, das von einer Vielzahl von Zellen gebildet ist, die jeweils von einem Zugangspunkt kontrolliert werden, das in einem Mobilitätsserver eingesetzt wird, umfassend die folgenden Schritte:
- Empfang von Lokalisierungsinformationen, die von einem mobilen Endgerät übertragen werden,
- in Abhängigkeit von den Lokalisierungsinformationen Bestimmung eines Zielkontextes, umfassend mindestens einen Identifikator des Zugangspunktes einer Zielzelle, an die sich das mobile Endgerät wenden kann;
- Übertragung des Zielkontextes an das mobile Endgerät durch Antizipation, die einen Einsatz eines Anschlussverfahrens des Endgeräts an den Zugangspunkt der Zielzelle in Abhängigkeit von einem vorbestimmten Zellentauschkriterium ermöglicht.

17. Computerprogrammprodukt, das von einem Kommunikationsnetzwerk fernladbar und/oder auf einem von einem Computer lesbaren Träger gespeichert und/oder von einem Mikroprozessor ausführbar ist, umfassend Programmcodebefehle für den Einsatz des Zuordnungsverfahrens nach Anspruch 16 in einem Mobilitätsserver.

## Claims

1. Method for allocating at least one access point to a mobile terminal in a cellular network formed of a plurality of cells each controlled by an access point and within which mobile terminals move about, comprising the following steps:
- localization of a mobile terminal within a current cell;
- identification, employing said localization, of a target cell to which said terminal is eligible to be connected;
- transmission to said terminal, in advance, of a target context, comprising at least one identifier of the access point of said target cell;
- implementation of a procedure for connecting said terminal to said access point of the target cell, depending on a predetermined criterion for changing the cell.

2. Method according to Claim 1, in which said localization step is implemented when at least one predetermined quality criterion has reached a first threshold.

3. Method according to Claim 2, in which said localization step is implemented by said mobile terminal, and comprises the following steps:
- detection that at least one of said predetermined criteria has reached the corresponding first threshold;
- determination of the localization of said mobile terminal;
- transmission of localization coordinates to a mobility controller, so that the latter can determine a target cell.

4. Method according to either of Claims 2 and 3, in which said predetermined criterion for changing the cell is identical to at least one of said predetermined quality criteria, said cell change being implemented when it has reached a second threshold.

5. Method according to any one of Claims 1 to 4, in which at least one of the steps belonging to a group comprising said localization step and/or a step for measuring said quality criterion/criteria are implemented in said mobile terminals.

6. Method according to any one of Claims 2 to 5, in which said quality criterion or criteria belong to the group comprising:
- a level of signal received;
- a change of transmitting and/or receiving mode;
- a type of modulation used;
- a signal-to-noise ratio;
- an error rate;
- a collision rate;
- an average access time;
- a ratio of data groups emitted and not received;
- a ratio of retransmission of data groups.

7. Method according to any one of Claims 1 to 6, in which the step for transmitting a target context is only implemented when an analysis of the localization indicates that said terminal is in proximity to a target cell, according to a predetermined localization criterion.

8. Method according to any one of Claims 1 to 7, in which said target context comprises at least one identifier of said target cell, represented by an IP-type address, a MAC-type address or at least information making it possible to reconstruct such an address.

9. Method according to Claim 8, in which said target context also comprises at least one of the items of information belonging to the group comprising:
- security information;
- encryption information;
- authentication information;
- information on the access and/or transmission technique implemented by the target access point;
- an address for said terminal, of IP type, a MAC-type address or at least information making it possible to reconstruct such an address.

10. Method according to any one of Claims 1 to 9, in which said step for transmitting a target context is, in predetermined conditions, completed by the transmission of at least one subsidiary target context to be used in the event that, after attempting connection, connection to the access point identified in the target context is not appropriate.

11. Mobile terminal intended to be implemented in a cellular network formed of a plurality of cells each controlled by an access point, comprising:
- means for localizing, within a current cell, and for transmitting localization information to a mobility controller;
- means for receiving, in advance, a target context, comprising at least one identifier of an access point of a target cell towards which it is eligible to be moving, said identifier of the access point of said target cell having been identified using said localization;
- means for connecting to said access point of the target cell, depending on a predetermined criterion for changing cell.

12. Mobile terminal according to Claim 11, comprising means for evaluating at least one quality criterion, managing said means for transmitting localization information and/or said connection means.

13. Mobility controller for a cellular network formed of a plurality of cells each controlled by an access point, comprising:
- means for receiving localization information transmitted by a mobile terminal;
- means for determining, depending on said localization information, a target context, comprising at least one identifier of the access point of a target cell towards which said mobile terminal is eligible to be moving;
- means for transmitting to said mobile terminal, in advance, said target context making it possible to implement a procedure for connecting said terminal to said access point of said target cell depending on a predetermined criterion for changing cell.

14. Method for controlling the allocation of at least one access point implemented in a mobile terminal present in a cellular network formed of a plurality of cells each controlled by an access point, comprising the following steps:
- localization of said terminal, within a current cell, and transmission of localization information towards a mobility controller;
- reception, in advance, of a target context, comprising at least one identifier of the access point of a target cell towards which it is eligible to be moving, said identifier of the access point of said target cell having been identified using said localization;
- connection to said access point of the target cell, depending on a predetermined criterion for changing cell.

15. Computer program product able to be downloaded from a communication network and/or stored on a medium able to be read by computer and/or able to be executed by a microprocessor, comprising program code instructions for implementing, in a mobile terminal, the allocation method according to Claim 14.

16. Method for controlling the allocation of at least one access point to a mobile terminal present in a cellular network formed of a plurality of cells each controlled by an access point, implemented in a mobility controller,
comprising the following steps:
- receiving localization information transmitted by a mobile terminal;
- determination, depending on said localization information, of a target context, comprising at least one identifier of the access point of a target cell towards which said mobile terminal is eligible to be moving;
- transmission to said mobile terminal, in advance, of said target context, making it possible to implement a procedure for connecting said terminal to said access point of said target cell depending on a predetermined criterion for changing cell.

17. Computer program product able to be downloaded from a communication network and/or stored on a medium able to be read by computer and/or able to be executed by a microprocessor, comprising program code instructions for implementing, in a mobility server, the allocation method according to Claim 16.
